# EUROPÄISCHE PATENTSCHRIFT

(11) **EP 4 094 931 B1**
(45) Veröffentlichungstag und Bekanntmachung des Hinweises auf die Patenterteilung: **10.04.2024**
(21) Anmeldenummer: 21176276.0
(22) Anmeldetag: 27.05.2021
(51) Int. Cl.: B29C 73/06

(54) **REPARATURKÖRPER UND VERFAHREN ZUR REPARATUR VON BESCHÄDIGUNGEN EINER SANDWICHSTRUKTUR**
REPAIR BODY AND METHOD FOR REPAIRING DAMAGE TO A SANDWICH STRUCTURE
CORPS DE RÉPARATION ET PROCÉDÉ DE RÉPARATION DES DOMMAGES D'UNE STRUCTURE SANDWICH

(43) Veröffentlichungstag der Anmeldung: 30.11.2022
(73) Patentinhaber: Airbus Operations GmbH, 21129 Hamburg (DE)
(72) Erfinder: Wesseloh, Marc, 21129 Hamburg (DE)
(74) Vertreter: KASTEL Patentanwälte PartG mbB

(56) Entgegenhaltungen:
- WO-A1-93/13932
- DE-A1- 10 119 913
- GB-A- 672 481
- US-A1- 2013 177 369
- US-A1- 2014 329 043

## Beschreibung

Die Erfindung betrifft ein Verfahren zur Reparatur einer Sandwichstruktur. Insbesondere betrifft die Erfindung die Reparatur von Sandwichstrukturen in Flugzeugen und anderen Transportmitteln.

Sandwichstrukturen sind insbesondere im Bereich des Flugzeugbaus von großer Bedeutung. Sie spielen eine wichtige Rolle zum Beispiel beim Bau von Verkehrs- und Transportflugzeugen, Helikoptern, unbemannten Flugkörpern und sonstigen Fluggeräten. Im Flugzeugbau werden Sandwichstrukturen beispielsweise im Bereich des Flugzeugrumpfes, der Tragflächen und Leitwerke sowie auch im Bereich der Kabine verwendet. Aber auch im Automobilbereich, im Schiffbau und bei der Fertigung anderer Transportmittel werden Sandwichstrukturen verwendet.

Die Sandwichstrukturen weisen üblicherweise einen wabenartigen Kern auf, der beidseitig mit darauf aufgebrachten Deckschichten aus faserverstärktem Kunststoffstoff versehen ist und auf diese Weise eine Sandwichplatte bildet. Dabei sind Fasern in eine Matrix eingebettet, die durch Reaktivharze wie zum Beispiel Polyester- oder Epoxidharz gebildet sein können. Auch können thermoplastische Kunststoffe wie beispielsweise Polyetheretherketon (PEEK) als Matrix verwendet werden, die durch Aufschmelzen verflüssigt werden. Als Fasern werden zumeist Glasfasern oder Kohlenstofffasern verwendet.

Bei der Fertigung und beim Betrieb von Flugzeugen und anderen Fluggeräten und Transportmitteln kann es zu Beschädigungen der Sandwichstrukturen kommen. Beispielsweise können Löcher, Risse oder Dellen entstehen, die im Außenbereich zum Beispiel durch Vogelschlag oder herumfliegende oder in die Luft aufgewirbelte Gegenstände verursacht sein können. Aber auch im Innenbereich, wie beispielsweise in der Kabine, sind Beschädigungen möglich.

Die US 2014 / 0 329 043 A1 offenbart ein Verfahren zur Reparatur einer Sandwichstruktur, wobei ein beschädigter Bereich der Sandwichstruktur zunächst entfernt, ein Reparaturkörper mit einem Honigwabenkern und ein Reparaturfüllstück in den ausgehöhlten Bereich eingesetzt und der aufgefüllte Bereich unter Unterdruck und Wärmebehandlung an den restlichen Bereich der Sandwichstruktur gebunden wird.

Die Erfindung betrifft die Reparatur von Beschädigungen mit einer relativ kleinen Ausdehnung, bei denen es nicht erforderlich ist, den Kern der Sandwichsstruktur auszutauschen, der zum Beispiel als ein Honigwabenkern ausgebildet ist.

Aufgabe der Erfindung ist es, eine Reparatur von Beschädigungen an Sandwichstrukturen zu ermöglichen, die schnell, mit wenig Werkzeug und zu geringen Kosten durchgeführt werden kann.

Zum Lösen dieser Aufgabe schafft die Erfindung ein Verfahren zur Reparatur einer Sandwichstruktur, wobei die Sandwichstruktur einen Kern umfasst, der eine Vielzahl von Zellen aufweist und beidseitig mit ein oder mehreren Deckschichten versehen ist, umfassend die Schritte:
a) Bereitstellen eines Reparaturkörpers, der einen als Reparaturpfropfen ausgebildeten ersten Bereich und einen als Drehelement zum Anschluss eines Drehantriebs ausgebildeten zweiten Bereich umfasst;
b) Positionieren des Reparaturkörpers an einer beschädigten Stelle der Sandwichstruktur;
c) Rotieren des Reparaturkörpers und Ausüben einer Kraft auf den Reparaturkörper derart, dass der erste Bereich durch Reibung an einer Oberfläche der Sandwichstruktur Wärme erzeugt und durch Schmelzen eines Bereichs der Sandwichstruktur in die Kernstruktur eindringt; und
d) Beenden der Rotation des Reparaturkörpers und Trennen des zweiten Bereichs vom ersten Bereich an einem dazwischen liegenden Trennbereich, wobei der als Reparaturpfropfen ausgebildete und in die Sandwichstruktur eingedrungene erste Bereich des Reparaturkörpers in der Sandwichstruktur verbleibt.

Bevorzugt erfolgt in Schritt d) das Trennen durch Abbrechen oder Abscheren des Drehelements vom Reparaturpfropfen.

Vorteilhaft wird nach Schritt d) die Oberfläche der Sandwichstruktur im Bereich der Trennstelle geglättet.

Vorzugsweise werden mehrere Reparaturpfropfen nebeneinander und insbesondere aneinander angrenzend in die Sandwichstruktur eingebracht.

Insbesondere erfolgt die Reibung des Reparaturpfropfens zumindest an der Deckschicht der Sandwichstruktur.

Vorzugsweise ist der Kern der Sandwichstruktur als eine Honigwabenstruktur ausgebildet.

Vorzugsweise wird zur Durchführung des erfindungsgemäßen Verfahrens ein Reparaturkörper zur Reparatur von Beschädigungen einer Sandwichstruktur verwendet, der Reparaturkörper umfassend einen ersten Bereich, der einen Reparaturpfropfen zum Eindringen und Verbleib in einer Sandwichstruktur im Bereich einer Beschädigung der Sandwichstruktur bildet; und
einen zweiten Bereich, der ein Drehelement zur Übertragung einer Drehkraft und einer axial gerichteten Kraft auf den Reparaturpfropfen bildet, um diesen durch Rotation in die Sandwichstruktur einzubringen; wobei der Reparaturpfropfen zur Erzeugung von Reibungswärme ausgebildet ist, wenn er beim Kontakt mit der Sandwichstruktur rotiert, um ein Aufschmelzen der Sandwichstruktur im Bereich des Kontakts zu bewirken; wobei ein dritter Bereich des Reparaturkörpers eine Trennstelle zum Trennen des Drehelements vom Reparaturpfropfen bildet.

Bevorzugt ist der Reparaturkörper einstückig ausgebildet.

Insbesondere hat der dritte Bereich des Reparaturkörpers einen geringeren Durchmesser als der Reparaturpfropfen und das Drehelement.

Vorteilhaft ist die Trennstelle als eine Sollbruchstelle des Reparaturkörpers ausgebildet.

Vorteilhafterweise ist der Reparaturkörper aus einem Thermoplast gefertigt.

Insbesondere kann der Reparaturkörper aus Polyphenylensulfid und/oder aus Polyamid gefertigt sein.

Zum Beispiel sind der Reparaturpfropfen, das Drehelement und die Trennstelle aus demselben Material gefertigt.

Bevorzugt ist der Reparaturpfropfen zumindest in einem Teilbereich zylindrisch oder kegelförmig ausgebildet.

Vorzugsweise weist der Reparaturpfropfen zumindest an seiner Vorderseite eine Reibfläche zur Erzeugung der Reibungswärme beim Eindringen in die Sandwichstruktur auf.

Vorteilhafterweise ist das Drehelement zur mechanischen Kopplung mit einem Drehantrieb ausgebildet.

Vorteile, Details, und Merkmale, die im Zusammenhang mit dem Reparaturkörper beschrieben sind, gelten jeweils wechselseitig auch für das erfindungsgemäße Verfahren.

Ein Ausführungsbeispiel wird im Folgenden anhand der beigefügten Zeichnungen näher erläutert. Darin zeigt:
- **Fig. 1**: einen Reparaturköper in einer schematischen Seitenansicht;
- **Fig. 2**: ein Beispiel einer beschädigten Sandwichstruktur in einer schematischen Draufsicht;
- **Figs. 3 a-f**: schematische Schnittdarstellungen der Schritte einer Reparatur einer Sandwichstruktur gemäß einem bevorzugten Ausführungsbeispiel des erfindungsgemäßen Verfahrens;
- **Fig. 4a**: die in Fig. 2 gezeigte Sandwichstruktur nachdem eine Reparatur mit dem Reparaturkörper und dem erfindungsgemäßen Verfahren durchgeführt wurde; und
- **Fig. 4b**: eine schematische Schnittdarstellung der in Fig. 4a gezeigten Sandwichstruktur entlang der Linie A-A' von Fig. 4a.

In den Figuren sind gleiche oder einander entsprechende Elemente jeweils mit den gleichen Bezugszeichen bezeichnet und werden daher nicht erneut beschrieben, wenn dies nicht zweckmäßig erscheint. Die in der gesamten Beschreibung enthaltenen Offenbarungen sind sinngemäß auf gleiche Teile mit gleichen Bezugszeichen bzw. gleichen Bauteilbezeichnungen übertragbar. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiterhin können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

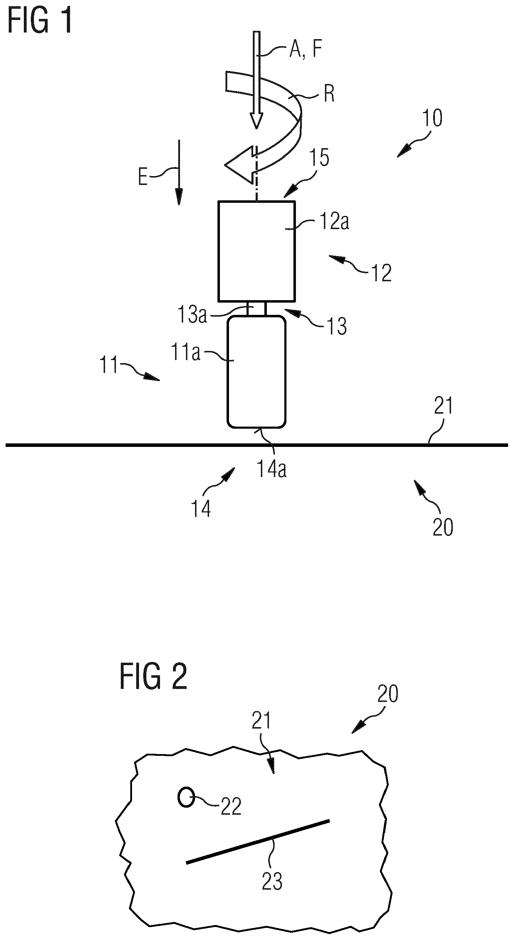

**Figur 1** zeigt einen Reparaturkörper 10. Der Reparaturkörper 10 eignet sich zur Reparatur von Beschädigungen einer Sandwichstruktur 20, die zum Beispiel in einem Flugzeug verwendet wird. Der Reparaturkörper 10 umfasst einen ersten Bereich 11, der als ein Reparaturpfropfen 11a ausgebildet ist und dazu dient, im Bereich einer Beschädigung der Sandwichstruktur 20 in die Sandwichstruktur eingebracht zu werden. Ein zweiter Bereich 12 des Reparaturkörpers 10 bildet ein Drehelement 12a zur Übertragung einer Drehkraft um eine Drehachse A und einer in Richtung der Achse A gerichteten Kraft F auf den Reparaturpfropfen 11a, um diesen durch Rotation R um die Achse A in die Sandwichstruktur 20 in einer Eindringrichtung E einzubringen.

Der als Reparaturpfropfen 11a ausgebildete erste Bereich 11 des Reparaturkörpers 10 ist so gestaltet, dass er beim Kontakt mit der Sandwichstruktur 20 durch seine Rotation R Reibungswärme erzeugt. Die Reibungswärme bewirkt ein Aufschmelzen der Sandwichstruktur 20 im Bereich ihres Kontakts mit dem rotierenden Reparaturpfropfen 11a, sodass dieser durch die orthogonal zur Oberfläche 21 der Sandwichstruktur 20 gerichtete Kraft F in die Sandwichstruktur 20 eindringen kann.

Zwischen dem ersten Bereich 11 und dem zweiten Bereich 12 weist der Reparaturkörper 10 einen dritten Bereich 13 auf, der eine Trennstelle 13a zum Trennen des Drehelements 12a vom Reparaturpfropfen 11a bildet.

Der dritte Bereich 13 des Reparaturkörpers 10 weist einen geringeren Durchmesser auf als der Reparaturpfropfen 11a und das Drehelement 12a. D. h., der Bereich 13 des Reparaturkörpers 10 ist dünner ausgestaltet als der daran an einer Seite angrenzende erste Bereich 11 und der an seiner gegenüberliegenden Seite angrenzende zweite Bereich 12.

Die Trennstelle 13a bildet auf diese Weise eine Sollbruchstelle zum Abbrechen oder Abscheren des Drehelements 12a vom Reparaturpfropfen 11a, nachdem dieser in die Sandwichstruktur 20 an der beschädigten Stelle eingebracht wurde, um diese auszubessern.

An einer Seite 14 des Reparaturkörpers 10, die in Eindringrichtung E des Reparaturkörpers 10 vorne angeordnet ist und bei der Reparatur der Sandwichstruktur 20 den Kontakt zu dieser bildet, befindet sich eine Reibfläche 14a. Die Reibfläche 14a ist durch eine raue Oberfläche des Reparaturpfropfens 11a an dessen Frontseite ausgebildet, um durch die Rotation des Reparaturpfropfens an der Sandwichstruktur 20 die Reibungswärme zu erzeugen.

Der Reparaturkörper 10 mit seinen Bereichen 11, 12, 13 ist einstückig ausgebildet bzw. aus einem einzigen Stück gefertigt. Vorzugsweise sind die Bereiche 11, 12, 13 aus demselben Material gefertigt.

Vorzugsweise ist der Reparaturkörper 10 aus Kunststoff bzw. aus einem Thermoplast gefertigt, beispielsweise aus Polyphenylensulfid oder aus Polyamid.

Der als Reparaturpfropfen 11a ausgebildete erste Bereich 11 des Reparaturkörpers 10 ist zylindrisch ausgebildet. Je nach Anforderung bzw. Art der Beschädigung der Sandwichstruktur 20 kann der Reparaturpfropfen 11a zum Beispiel auch kegelförmig oder in einer anderen Form ausgebildet sein, die das Eindringen in die Sandwichstruktur 20 durch Rotation des Reparaturpfropfens 11a erlaubt.

Das Drehelement 12a bzw. der zweite Bereich 12 des Reparaturkörpers 10 ist derart ausgebildet, dass ein in der Figur nicht dargestellter Drehantrieb mechanisch an das Drehelement 12a gekoppelt werden kann. Hierzu ist beispielsweise an der Rückseite 15 des Reparaturkörpers 10 ein in der Figur nicht sichtbarer Eingriff für einen Antrieb wie beispielsweise eine Antriebswelle ausgebildet, um auf den Reparaturkörper 10 die axial gerichteten Kraft F in Richtung der Sandwichstruktur 20 auszuüben und die Rotation R zu bewirken.

Nachfolgend wird anhand der **Figuren 2 bis 4** ein Ausführungsbeispiel des erfindungsgemäßen Verfahrens zur Reparatur einer Sandwichstruktur 20 beschrieben.

Hierzu zeigt **Figur 2** zunächst zwei Beispiele von Beschädigungen einer Sandwichstruktur 20, wobei in der Figur die Sandwichstruktur 20 in einer Draufsicht auf ihre Oberseite 21 dargestellt ist.

Eine erste Beschädigung 22, die in der Sandwichstruktur 20 eine Beule oder auch ein Loch in der Deckschicht der Sandwichstruktur bildet, ist beispielsweise durch einen Einschlag verursacht. Eine zweite Beschädigung 23 der Sandwichstruktur 20 wird in diesem Beispiel durch einen Riss gebildet, der sich an der Oberseite 21 bzw. der Deckschicht der Sandwichstruktur 20 erstreckt.

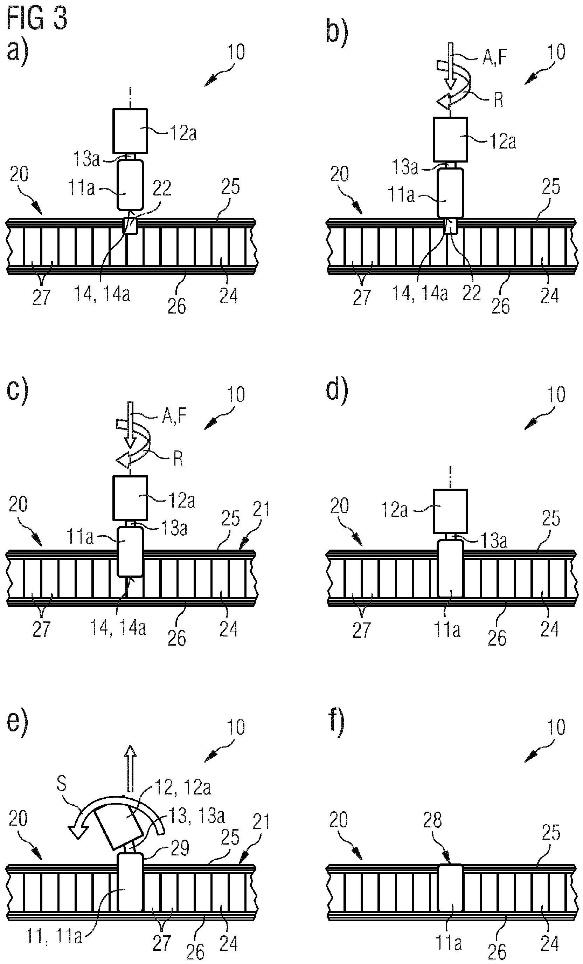

Die einzelnen Reparaturschritte gemäß diesem Beispiel werden anhand der **Figuren 3a****-f** erläutert.

Die Sandwichstruktur 20 ist als ein Sandwichpanel ausgebildet und umfasst einen Kern 24, der beidseitig mit einer Deckschicht 25 bzw. 26 versehen ist. Dabei bildet in diesem Beispiel die Deckschicht 25 eine Vorderseite der Sandwichstruktur 20, während die zweite Deckschicht 26 eine Rückseite der Sandwichstruktur 20 bildet. Die Deckschichten 25, 26 sind jeweils aus mehreren übereinander liegenden Lagen gebildet. Der Kern 24 umfasst eine Vielzahl von Waben 27, die in der Art von Honigwaben ausgestaltet sind, d. h. der Kern 20 ist ein Honigwabenkern.

In einem ersten Schritt des Verfahrens, der in **Figur 3a** gezeigt ist, wird der oben beschriebene Reparaturkörper 10 mit seinem als Reparaturpfropfen 11a ausgebildeten ersten Bereich 11 und seinem als Drehelement 12a ausgebildeten zweiten Bereich 12 bereitgestellt und an einer beschädigten Stelle 22 der Sandwichstruktur 20 positioniert, wie sie als Beispiel in Figur 2 gezeigt ist.

Dabei wird der Reparaturkörper 10 so ausgerichtet, dass seine Vorderseite 14 mit der dort ausgebildeten Reibfläche 14a der beschädigten Stelle 22 gegenüber liegt.

In einem nächsten Schritt, der in **Figur 3b** gezeigt ist, wird der Reparaturkörper 10 in Rotation R versetzt und an der beschädigten Stelle 22 mit der Deckschicht 25 der Sandwichstruktur 20 in Kontakt gebracht. Dabei liegt die Vorderseite 14 des Reparaturpfropfens 11 an der beschädigten Deckschicht 25 an.

Wie in **Figur 3c** gezeigt, wird in axialer Richtung A des rotierenden Reparaturkörpers 10 auf diesen eine Kraft F ausgeübt, so dass sein erster Bereich 11 bzw. der Reparaturpfropfen 11a durch Reibung seiner Reibfläche 14a an der Oberfläche 21 der Sandwichstruktur 20 Wärme erzeugt. Die erzeugte Wärme bewirkt ein Schmelzen der Sandwichstruktur 20 im Bereich der Beschädigung 22, sodass der Reparaturpfropfen 11a durch die Deckschicht 25 hindurch in den Kern 24 der Sandwichstruktur bzw. des Sandwichpanels 20 eindringt. D. h., der Reparaturpfropfen 11a wird an das Sandwichpanel 20 gepresst, und er wird durch Reibung an dessen Oberfläche 21 in den Honigwabenkern 24 hineingeschmolzen.

Wie in **Figur 3d** gezeigt, befindet sich nun der Reparaturpfropfen 11a größtenteils innerhalb der Sandwichstruktur 20, wobei der Reparaturpfropfen 11a mit seinem Außenumfang an der Innenseite einer Öffnung in der Deckschicht 25 anliegt, die er beim Eindringen in die Sandwichstruktur 20 geschaffen hat. Die Rotation des Reparaturkörpers 10 wird nun beendet.

Wie in **Figur 3e** gezeigt, wird nach dem Beenden der Rotation R der zweite Bereich 12 der Sandwichstruktur 20, welcher sich vollständig außerhalb der Sandwichstruktur 20 befindet, vom ersten Bereich 11 des Reparaturkörpers 10 getrennt und entfernt. Dadurch bleibt der erste Bereich 11, d. h. der Reparaturpfropfen 11a, in der Sandwichstruktur 20 und dichtet diese an der Stelle ab, wo sich zuvor die Beschädigung 22 befand.

Das Trennen des zweiten Bereichs 12 vom ersten Bereich 11 erfolgt durch Brechen des Reparaturkörpers 10 an seiner Trennstelle 13a, die durch den Trennbereich 13 gebildet wird, der sich zwischen dem ersten Bereich 11 und dem zweiten Bereich 12 des Reparaturkörpers 10 befindet. Das Abbrechen des zweiten Bereichs 12 erfolgt zum Beispiel durch Knicken, wobei eine Schwenkbewegung S des zweiten Bereichs gegenüber dem ersten Bereich 11 um eine Achse durchgeführt wird, die sich durch den starren Trennbereich 13 erstreckt und senkrecht zur Längsachse des Reparaturkörpers 10 gerichtet ist, so dass dadurch der Trennbereich gebrochen wird.

Ein gegebenenfalls vorhandener Überstand 29 des sich nun in der Sandwichstruktur 20 befindenden Reparaturpfropfens 11a, der nach dem Abtrennen des Drehelements 12a über die Ebene der Deckschicht 25 hinausragen kann, wird nun entfernt, wie in **Figur 3f** gezeigt.

Auch kann sich noch ein Rest des Trennbereich 13a an dem gegebenenfalls herausragenden Teil 29 des Reparaturpfropfens 11a befinden, der dabei ebenfalls entfernt wird. Dies kann zum Beispiel durch Schneiden und/oder Schmirgeln erfolgen, sodass sich eine ebene bzw. glatte Oberfläche ergibt, welche die Oberseite 28 des Reparaturpfropfens 11a mit der umgebenden Deckschicht 25 bildet.

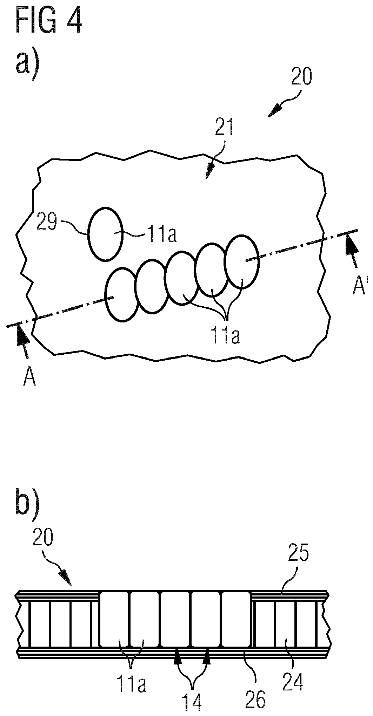

**Figur 4a** zeigt die reparierte Stelle 29 an der Oberseite der Sandwichstruktur 20, wobei sich anstelle der ursprünglichen Beschädigung 22 (siehe Figur 2) nun der Reparaturpfropfen 11a als eine Füllung in der Sandwichstruktur 20 befindet, der sich senkrecht in den Kern 24 der Sandwichstruktur 20 hinein erstreckt. Auf diese Weise deckt der Reparaturpfropfen 11a die ursprünglich beschädigte Stelle 22 ab und füllt diese in der Art eines Pfropfens bzw. Steckers oder Füllelements, der auf diese Weise ein Verschlusselement bildet.

Zusätzlich zeigt Figur 4a eine Reihe von nebeneinander in der Sandwichstruktur 20 angeordneten Reparaturpfropfen 11a. Die Anordnung von Reparaturpfropfen 11a erstreckt sich in einer Längsrichtung an der Stelle der ursprünglichen Beschädigung 23 (siehe Fig. 2), die in Form eines Risses in der Sandwichstruktur 20 ausgebildet war. Die Reparaturpfropfen 11a können sich gegenseitig teilweise überlappen. Jeder Reparaturpfropfen 11a der Anordnung wird auf die oben beschriebene Weise in die Sandwichstruktur 20 eingebracht.

Ergänzend dazu zeigt **Figur 4b** zeigt eine Schnittansicht der Sandwichstruktur 20 entlang der Linie A-A' von Figur 4a. Die nebeneinander angeordneten Reparaturpfropfen 11a erstrecken sich entlang des ursprünglichen Risses 23 (siehe Fig. 2) in die Sandwichstruktur 20 über die gesamte Dicke des Kerns 24 und grenzen dabei mit ihrer jeweiligen Vorderseite 14 innerhalb des Kerns 24 an die untere Deckschicht 26 an.

Durch die Erfindung können Risse, Löcher, Einbuchtungen, Dellen, und ähnliche Beschädigungen einer Sandwichstruktur repariert werden, die eine relativ kleine Ausdehnung haben. Der Reparaturpfropfen 11a hat zum Beispiel einen Durchmesser kleiner als 40 mm, bevorzugt kleiner als 30 mm und insbesondere bevorzugt bis zu ca. 20 mm. Je nach Ausgestaltung sind aber auch andere Abmessungen möglich.

Die Erfindung ermöglicht einen sehr schnellen Reparaturvorgang im Vergleich zu herkömmlichen Reparaturverfahren. Dabei ist keine Aushärtezeit erforderlich, sodass Reparaturvorgänge schneller durchgeführt werden können. Weiterhin werden weniger Werkzeuge benötigt. Auch ergibt sich durch das erfindungsgemäße Verfahren und durch den Reparaturkörper eine Kostenreduktion bei der Reparatur von Sandwichstrukturen.

Die Erfindung kann insbesondere im Bereich der Fertigung von Flugzeugen sowie auch zur Aufbereitung oder Erneuerung von Flugzeugen verwendet werden. Die Erfindung ist insbesondere anwendbar für Flugzeuge, Helikopter, im Automobilbereich und bei anderen Transportmitteln, bei denen Sandwichstrukturen eine Rolle spielen.

### Bezugszeichenliste:

- 10: Reparaturkörper
- 11: 1. Bereich
- 11a: Reparaturpfropfen
- 12: 2. Bereich
- 12a: Drehelement
- 13: 3. Bereich
- 13a: Trennstelle
- 14: Vorderseite
- 14a: Reibfläche
- 15: Rückseite
- 20: Sandwichstruktur
- 21: Oberseite
- 22, 23: Beschädigung
- 24: Kern
- 25, 26: Deckschichten
- 27: Waben, Zellen
- 28: Oberseite
- 29: Überstand

- A: Achse, axialer Richtung
- E: Eindringrichtung
- F: Kraft
- R: Rotation
- S: Schwenkbewegung

## Patentansprüche

1. Verfahren zur Reparatur einer Sandwichstruktur, wobei die Sandwichstruktur (20) einen Kern (24) umfasst, der eine Vielzahl von Zellen (27) aufweist und beidseitig mit ein oder mehreren Deckschichten (25, 26) versehen ist, umfassend die Schritte:
a) Bereitstellen eines Reparaturkörpers (10), der einen als Reparaturpfropfen (11a) ausgebildeten ersten Bereich (11) und einen als Drehelement (12a) zum Anschluss eines Drehantriebs ausgebildeten zweiten Bereich (12) umfasst;
b) Positionieren des Reparaturkörpers (10) an einer beschädigten Stelle der Sandwichstruktur (20);
c) Rotieren des Reparaturkörpers (10) und Ausüben einer Kraft (F) auf den Reparaturkörper (10) derart, dass der erste Bereich (11) durch Reibung an einer Oberfläche (21) der Sandwichstruktur (20) Wärme erzeugt und durch Schmelzen eines Bereichs der Sandwichstruktur (20) in den Kern (24) eindringt; und
d) Beenden der Rotation des Reparaturkörpers (10) und Trennen des zweiten Bereichs (12) vom ersten Bereich (11) an einem dazwischen liegenden Trennbereich (13), wobei der als Reparaturpfropfen (11a) ausgebildete und in die Sandwichstruktur (20) eingedrungene erste Bereich (11) des Reparaturkörpers (10) in der Sandwichstruktur (20) verbleibt.

2. Verfahren nach Anspruch 1, **dadurch gekennzeichnet, dass** in Schritt d) das Trennen durch Abbrechen oder Abscheren des Drehelements (12a) vom Reparaturpfropfen (11a) erfolgt.

3. Verfahren nach Anspruch 1 oder 2, **dadurch gekennzeichnet, dass** nach Schritt d) die Oberfläche (21) der Sandwichstruktur (20) im Bereich der Trennstelle (13a) geglättet wird

4. Verfahren nach einem der vorhergehenden Ansprüche, **dadurch gekennzeichnet, dass** mehrere Reparaturpfropfen (11a) nebeneinander und aneinander angrenzend in die Sandwichstruktur (20) eingebracht werden.

5. Verfahren nach einem der vorhergehenden Ansprüche, **dadurch gekennzeichnet, dass** die Reibung des Reparaturpfropfens (11a) an der Deckschicht (25) der Sandwichstruktur (20) erfolgt.

6. Verfahren nach einem der vorhergehenden Ansprüche, **dadurch gekennzeichnet, dass** der Kern (24) als eine Honigwabenstruktur ausgebildet ist.

7. Verfahren nach einem der vorhergehenden Ansprüche, **dadurch gekennzeichnet, dass** zur Durchführung des Verfahrens ein Reparaturkörper (10) zur Reparatur von Beschädigungen einer Sandwichstruktur verwendet wird, der Reparaturkörper (10) umfassend:
einen ersten Bereich (11), der einen Reparaturpfropfen (11a) zum Eindringen und Verbleib in einer Sandwichstruktur (20) im Bereich einer Beschädigung (22, 23) der Sandwichstruktur (20) bildet; und
einen zweiten Bereich (12), der ein Drehelement (12a) zur Übertragung einer Drehkraft und einer axial gerichteten Kraft auf den Reparaturpfropfen (11a) bildet, um diesen durch Rotation in die Sandwichstruktur (20) einzubringen;
wobei der Reparaturpfropfen (11a) zur Erzeugung von Reibungswärme ausgebildet ist, wenn er beim Kontakt mit der Sandwichstruktur (20) rotiert, um ein Aufschmelzen der Sandwichstruktur (20) im Bereich des Kontakts zu bewirken;
wobei ein dritter Bereich (13) des Reparaturkörpers (10) eine Trennstelle (13a) zum Trennen des Drehelements (12a) vom Reparaturpfropfen (11a) bildet.

## Claims

1. Method for repairing a sandwich structure, wherein the sandwich structure (20) comprises a core (24), which has a multiplicity of cells (27) and is provided on either side with one or more covering layers (25, 26), comprising the following steps:
a) providing a repair element (10), which comprises a first region (11) in the form of a repair plug (11a) and a second region (12) in the form of a rotary element (12a) for connection of a rotary drive;
b) positioning the repair element (10) at a damaged location of the sandwich structure (20);
c) rotating the repair element (10) and exerting a force (F) on the repair element (10) in such a way that the first region (11) generates heat by rubbing against a surface (21) of the sandwich structure (20) and penetrates the core (24) by melting a region of the sandwich structure (20); and
d) ending the rotation of the repair element (10) and separating the second region (12) from the first region (11) at a separating region (13) in between said first and second regions, wherein the first region (11), which is in the form of a repair plug (11a) and has penetrated the sandwich structure (20), of the repair element (10) remains in the sandwich structure (20).

2. Method according to Claim 1, **characterized in that**, in step d), the separating is effected by breaking or shearing the rotary element (12a) off of the repair plug (11a).

3. Method according to Claim 1 or 2, **characterized in that**, after step d), the surface (21) of the sandwich structure (20) is smoothed in the region of the separation point (13a).

4. Method according to one of the preceding claims, **characterized in that** multiple repair plugs (11a) are introduced into the sandwich structure (20) next to one another and adjoining one another.

5. Method according to one of the preceding claims, **characterized in that** the repair plug (11a) rubs against the covering layer (25) of the sandwich structure (20).

6. Method according to one of the preceding claims, **characterized in that** the core (24) is in the form of a honeycomb structure.

7. Method according to one of the preceding claims, **characterized in that**, to carry out the method, use is made of a repair element (10) for repairing damage to a sandwich structure, the repair element (10) comprising:
a first region (11), which forms a repair plug (11a) for penetrating and remaining in a sandwich structure (20) in the region of damage (22, 23) to the sandwich structure (20); and
a second region (12), which forms a rotary element (12a) for transmitting a rotational force and an axially directed force to the repair plug (11a), in order to introduce the latter into the sandwich structure (20) by rotation;
wherein the repair plug (11a) is designed to generate frictional heat when it rotates upon contact with the sandwich structure (20), in order to cause the sandwich structure (20) to melt in the region of the contact;
wherein a third region (13) of the repair element (10) forms a separation point (13a) for separating the rotary element (12a) from the repair plug (11a).

## Revendications

1. Procédé de réparation d'une structure en sandwich, la structure en sandwich (20) comprenant un noyau (24) qui présente une pluralité de cellules (27) et qui est pourvu des deux côtés d'une ou plusieurs couches de recouvrement (25, 26), comprenant les étapes suivantes :
a) la fourniture d'un corps de réparation (10) qui comprend une première zone (11) configurée sous forme de bouchon de réparation (11a) et une deuxième zone (12) configurée sous forme d'élément rotatif (12a) pour le raccordement d'un entraînement en rotation ;
b) le positionnement du corps de réparation (10) à un emplacement endommagé de la structure en sandwich (20) ;
c) la mise en rotation du corps de réparation (10) et l'application d'une force (F) au corps de réparation (10) de telle sorte que la première zone (11) génère de la chaleur par frottement contre une surface (21) de la structure en sandwich (20) et pénètre dans le noyau (24) par fusion d'une zone de la structure en sandwich (20) ; et
d) l'arrêt de la rotation du corps de réparation (10) et la séparation de la deuxième zone (12) de la première zone (11) au niveau d'une zone de séparation (13) située entre les deux, la première zone (11) du corps de réparation (10) configurée sous forme de bouchon de réparation (11a) et ayant pénétré dans la structure en sandwich (20) restant dans la structure en sandwich (20).

2. Procédé selon la revendication 1, **caractérisé en ce qu'**à l'étape d), la séparation est effectuée en cassant ou en cisaillant l'élément rotatif (12a) du bouchon de réparation (11a).

3. Procédé selon la revendication 1 ou 2, **caractérisé en ce qu'**après l'étape d), la surface (21) de la structure en sandwich (20) est lissée dans la zone de l'emplacement de séparation (13a).

4. Procédé selon l'une quelconque des revendications précédentes, **caractérisé en ce que** plusieurs bouchons de réparation (11a) sont introduits côte à côte et adjacents les uns aux autres dans la structure en sandwich (20).

5. Procédé selon l'une quelconque des revendications précédentes, **caractérisé en ce que** le frottement du bouchon de réparation (11a) est effectué contre la couche de recouvrement (25) de la structure en sandwich (20).

6. Procédé selon l'une quelconque des revendications précédentes, **caractérisé en ce que** le noyau (24) est configuré sous la forme d'une structure en nid d'abeilles.

7. Procédé selon l'une quelconque des revendications précédentes, **caractérisé en ce que**, pour la mise en œuvre du procédé, un corps de réparation (10) est utilisé pour réparer des endommagements d'une structure en sandwich, le corps de réparation (10) comprenant :
une première zone (11) formant un bouchon de réparation (11a) destiné à pénétrer et à rester dans une structure en sandwich (20) dans la zone d'un endommagement (22, 23) de la structure en sandwich (20) ; et
une deuxième zone (12) formant un élément rotatif (12a) pour transmettre une force de rotation et une force dirigée axialement au bouchon de réparation (11a) afin de l'introduire par rotation dans la structure en sandwich (20) ;
dans lequel le bouchon de réparation (11a) est configuré pour générer de la chaleur de frottement lorsqu'il est mis en rotation lors du contact avec la structure en sandwich (20) afin de provoquer une fusion de la structure en sandwich (20) dans la zone du contact ;
dans lequel une troisième zone (13) du corps de réparation (10) forme un emplacement de séparation (13a) pour séparer l'élément rotatif (12a) du bouchon de réparation (11a).
